# EUROPEAN PATENT SPECIFICATION

(11) **EP 1 397 801 B1**
(45) Date of publication and mention of the grant of the patent: **02.01.2008**
(21) Application number: 02733072.9
(22) Date of filing: 27.05.2002
(51) Int. Cl.: G11B 7/24

(54) **REWRITABLE OPTICAL DATA STORAGE MEDIUM AND USE OF SUCH A MEDIUM**
WIEDERBESCHREIBBARES OPTISCHES AUFZEICHNUNGSMEDIUM UND SEINE VERWENDUNG
SUPPORT D'ENREGISTREMENT OPTIQUE REENREGISTRABLE ET SES UTILISATIONS

(30) Priority: 01.06.2001 EP 01202108
(43) Date of publication of application: 17.03.2004
(73) Proprietor: Koninklijke Philips Electronics N.V., 5621 BA Eindhoven (NL)
(72) Inventor: ZHOU, Guo-Fu, NL-5656 AA Eindhoven (NL); RIJPERS, Johannes, C., N., NL-5656 AA Eindhoven (NL); MEINDERS, Erwin, R., NL-5656 AA Eindhoven (NL); BORG, Hermanus, J., NL-5656 AA Eindhoven (NL)
(74) Representative: Deguelle, Wilhelmus H. G.
(86) International application number: PCT/IB2002/001922
(87) International publication number: WO 2002/099797

(56) References cited:
- EP-A- 0 717 404
- EP-A- 0 810 590
- EP-A- 1 058 249
- WO-A-02/17304
- US-A- 5 383 172

## Description

The invention relates to an optical data storage medium for rewritable recording by means of a focused laser-light beam, said medium having a substrate with deposited on a side thereof a recording stack comprising:
- at least one transparent layer,
- a phase-change type recording layer,
- a further transparent layer, present in the recording stack at a side of the recording layer opposite from the side of the transparent layer,
- a metal reflective layer.

The invention also relates to the use of such an optical data storage medium in high data rate recording applications.

An embodiment of an optical data storage medium of the type mentioned in the opening paragraph is known from European Patent application EP 0849729 A2. The embodiment described in this patent application has an |I⁺IPIM| structure for rewritable phase-change recording in which M is a metal reflective layer with high optical reflection, I represents a dielectric layer, I⁺ represents a transparent high hardness layer and P represents a phase-change type recording layer. In this structure, the laser-light beam enters first through the I⁺ layer. The I⁺ layer seeks to improve the stability of the medium with regard to write characteristics, e.g. jitter. As possible materials for the high hardness layer I⁺ are mentioned a large number of compounds including oxides and nitrides of Si, Ge, Al, Ti, Zr, Ta, Nb, In, Sn, Pb, Mg, etc. and indium tin oxide.

In European Patent application EP 1058249 At a phase change optical recording medium is disclosed including a supporting substrate and the following contiguous layers formed in the supporting substrate in the order recited such as a first dielectric layer, a recording layer, a second dielectric layer, a metal/alloy layer and a an ultraviolet light curing resinous layer. Examples of suitable materials for forming the first and second dielectric layers include metal oxides such as SiO, SiO 2, ZnO, SnO2, Al2O3, TiO2, In2O3, MgO and ZrO2 ; nitrides such as Si3N4, AlN, TiN, BN and ZrN; sulfides such as ZnS, In2S3 and TaS4; carbides such as SiC, TaC, B4C, WC, TiC and ZrC; diamond- like carbon and mixtures thereof. These materials may be used individually or in combination. In addition they may further include impurities, where relevant.

In European Patent application EP 0717404 A1 an optical recording medium is disclosed with a first protective layer, a recording layer, a second protective layer successively overlaid on a substrate. Specific examples of the material for use in the first and second protective layers include oxides such as SiO, SiO2, ZnO, SnO2, Al2O3, TiO2, In2O3, MgO, and ZrO2 ; nitrides such as Si3N4, AlN, TiN, BN and ZrN; sulfides such as ZnS, In2S3 and TaS4; carbides such as SiC, TaC4, B4C, WC, TIC and ZrC; carbon with a diamond structure: and mixtures thereof.

In European Patent application EP 0810590 A2 an optical data recording medium is disclosed comprising (a) a first light transmissive substrate having a first surface that forms an outer face for receipt of incident laser light and a second surface opposite said first surface; (b) a first recording layer of reverse writing type of reversible phase-change material formed on the second surface of the first substrate and spaced from the substrate outer face by the thickness of the first substrate; (c) an optical interference film in contact with the first recording laver and transmissive to the light.

An optical data storage medium based on the phase-change principle is attractive, because it combines the possibilities of direct overwrite (DOW) and high storage density with easy compatibility with read-only optical data storage systems. Data storage, in this context, includes digital video-, digital audio- and software-data storage. Phase-change optical recording involves the formation of submicrometer-sized amorphous recording marks in a crystalline recording layer using a focused relatively high power laser-light beam. During recording of information, the medium is moved with respect to the focused laser-light beam that is modulated in accordance with the information to be recorded. Marks are formed when the high power laser-light beam melts the crystalline recording layer. When the laser-light beam is switched off and/or subsequently moved relatively to the recording layer, quenching of the molten marks takes place in the recording layer, leaving an amorphous information mark in the exposed areas of the recording layer that remains crystalline in the unexposed areas. Erasure of written amorphous marks is realized by recrystallization through heating with the same laser at a lower power level, without melting the recording layer. The amorphous marks represent the data bits, which can be read, e.g. via the substrate, by a relatively low-power focused laser-light beam. Reflection differences of the amorphous marks with respect to the crystalline recording layer bring about a modulated laser-light beam which is subsequently converted by a detector into a modulated photocurrent in accordance with the recorded information.

One of the most important demands in phase-change optical recording is a high data rate, which means that data can be written and rewritten in the medium with a user data rate of at least 30Mbits/s. Such a high data rate requires the recording layer to have a high crystallization speed, i.e. a short crystallization time, during DOW. To ensure that previously recorded amorphous marks can be recrystallized during DOW, the recording layer must have a proper crystallization speed to match the velocity of the medium relative to the laser-light beam. If the crystallization speed is not high enough the amorphous marks from the previous recording, representing old data, cannot be completely erased, meaning recrystallized, during DOW. This causes a high noise level. A high crystallization speed is particularly required in high-density recording and high data rate optical recording media, such as in disk-shaped CD-RW high speed, DVD-RW, DVD+RW, DVD-RAM, DVR-red and blue which respectively are abbreviations of the known Compact Disk and the new generation high density Digital Versatile Disk+RW and -RAM, where RW and RAM refer to the rewritability of such disks, and Digital Video Recording optical storage disks, where red and blue refer to the used laser wavelength. For these disks the complete erasure time (CET) has to be lower than 30 ns. CET is defined as the minimum duration of an erasing pulse for complete crystallization of a written amorphous mark in a crystalline environment, which is measured with static tester. For DVD+RW, which has a 4.7 GB recording density per 120 mm disk, a user data bit rate of 26 Mbits/s is needed, and for DVR-blue said rate is 35 Mbits/s. For high speed versions of DVD+RW and DVR-blue data rates of 50 Mbits/s and higher are required. Each of these data bit rates can be translated to a maximum CET which is influenced by several parameters, e.g. thermal design of the recording stacks and the recording layer materials used.

It is thus an aim to increase the data rate of optical recording media like DVD-Rewritable and DVR (Digital Video Recorder). As explained above this can be achieved by an increased crystallization speed of the phase-change material, which further reduces the CET. However, when the crystallization speed becomes high, amorphization becomes difficult because crystallite growth from the crystalline background, during writing of data, is unavoidable. This results in relatively small, difficult to read, amorphous marks with irregular edges, causing a high jitter level. Crystallite growth can be counteracted by a higher cooling rate of the recording layer. Sufficient heat sink action of layers adjacent the recording layer is required in order to ensure proper amorphous mark formation during recording. The thermal conductivity of these adjacent layers, e.g. a dielectric layer, appears to be too low, and therefore their ability to rapidly reduce the temperature in the recording layer is limited. It may even be impossible to successfully write in a layer with a relatively slow cooling behavior at a high enough data rate. In other words: the amorphous mark formation is highly counteracted because of the slow cooling rate of the P layer allowing substantial recrystallization.

It is an object of the invention to provide an optical data storage medium of the kind described in the opening paragraph, which has an improved heat sink action in order to ensure proper amorphous mark formation in the recording layer of the recording stack.

This object is achieved in that the transparent layer and the further transparent layer comprises the material indium tin oxide.

The invention is based on the insight that the thermal conductivity of an indium tin oxide layer (ITO) is relatively high compared to known transparent layers, e.g. conventional dielectric layers known in the art of optical recording. Due to the presence of ITO as a transparent layer, which has a low thermal resistance, in the recording stack heat can easily flow into the metal reflective layer. ITO is a material that is normally used because of its relatively high electrical conductivity e.g. as a transparent electrode in liquid crystal displays (LCD's). Use of ITO as a material with high thermal conductivity in optical recording stacks is not known. As a result of the present invention data rates of higher than 50 Mbits/s are possible. Higher cooling rates may also be achieved by a reduced dielectric layer thickness, but this is often not wanted due to optical requirements. A further transparent layer, comprising the material indium tin oxide, is present in the recording stack at a side of the recording layer opposite from the side of the transparent layer. In such way, a thermally symmetrical stack is formed with a transparent layer with heat sink action on both sides of the recording layer. This has the advantage of improved cooling behavior, which results in a more optimal writing and erasing of amorphous marks in the recording layer.

In an embodiment of the optical data storage medium of the invention, the transparent layer is interposed between the recording layer and the metal reflective layer. The thermal resistance between the metal reflective layer and the recording layer is relatively low when using ITO as a transparent layer compared to a non-ITO transparent layer.

In a further embodiment, the transparent layer is present in contact with the recording layer. By having direct contact the heat of the recording layer during recording is optimally transferred to the transparent ITO layer and the CET is further shortened by up to about 10%.

In yet another embodiment, at least one dielectric layer is present in the recording stack in contact with the recording layer. This dielectric layer may be used to shield the ITO layer from the recording layer. In some cases, it may be desirable to isolate the ITO layer from the recording layer in case the material of the recording layer could possibly interact with the material of the ITO layer. Further, it may be used to fine tune the optical design of the stack and/or to fine tune the thermal resistance between the recording layer and the ITO layers. The dielectric layers I are preferably made of a mixture of sense and SiO₂, e.g. (ZnS)₈₀(SiO₂)₂₀. The layers may also be made of SiO₂, Ta₂O₅, Ti02, ZnS, including their non-stoichiometric compositions.

In a further favorable embodiment, the dielectric layer comprises a compound selected from the group consisting of Al₂O₃, SiC, Si₃N₄, MgO, ZnO and AlN including their non-stoichiometric compositions. These layers increase the crystallization speed of the amorphous marks during DOW, directly resulting in a higher possible data rate. The interface between these layers and the recording layer acts as a nucleation source for crystallization of the amorphous marks.

In another favorable embodiment, the metal reflective layer comprises the metal Ag. Ag is known for its very high thermal conductivity, which in combination with the ITO layers leads to even higher cooling rates.

Preferably, the transparent layer, when present between the metal reflective layer and the recording layer has a thickness in the range of 10 to 50 nm. A too thick layer may have a relatively low heat transfer capability towards the metal reflective layer. Furthermore, a too thick layer may deteriorate the optical contrast of the recording stack, the reflection difference between amorphous mark and crystalline background.

Preferably the further transparent layer, when present at the side of the recording layer remote from the metal reflective layer, has a thickness in the range of 50 to 250 nm. A layer thickness in this range gives a relatively well optical contrast of the recording stack.

The recording layer preferably comprises the elements Ge and Te. Further useful are compounds of Ge-Sb-Te, Ge-In-Sb-Te and Ag-In-Sb-Te. Especially useful are the compounds described in the international patent applications WO O1/13370 and WO 97/50084 both filed by applicants. The compounds in WO 97/50084 have a composition defined in atomic percentages by the formula:
Ge₅₀ₓSb₄₀₋₄₀ₓTe₆₀₋₁₀ₓ, wherein 0.166 ≤ x ≤ 0.444. These compositions are situated on the line connecting the compounds GeTe and Sb₂Te₃ in the triangular Ge-Sb-Te composition diagram, and include the stoichiometric compounds Ge₂Sb₂Te₅ (x=0.444), GeSb₂Te₄ (x=0.286) and GeSb₄Te₇ (x=0.166). These compounds show a short crystallization (erasure) time.

The compounds in WO 01/13370 have a composition defined in atomic percentages by the formula:

Qₐ In_{b} Sb_{c} Te_{d} (in atomic percentages),

wherein
Q is selected from the group consisting of Ag and Ge,
2<a<8
0<b<6
55<c<80
15 < d < 30 and a + b + c + d = 100.

The substrate of the data storage medium is at least transparent for the laser wavelength, and is made, for example, of polycarbonate, polymethyl methacrylate (PMMA), amorphous polyolefin or glass. Transparency of the substrate is only required when the laser-light beam enters the recording stacks via the entrance face of the substrate. In a typical example, the substrate is disk-shaped and has a diameter of 120 mm and a thickness of 0.6 or 1.2 mm. The substrate may be opaque when the laser-light beam enters the stack via the side opposite from the side of the substrate.

The surface of the disk-shaped substrate on the side of the recording stacks, preferably, is provided with a servotrack, which can be scanned optically. This servotrack is often constituted by a spiral-shaped groove and is formed in the substrate by means of a mould during injection molding or pressing. These grooves can be alternatively formed in a replication process in the synthetic resin of the spacer layer, for example, a UV light-curable acrylate

Optionally, the outermost layer of the stack is screened from the environment by means of a protective layer of, for example, UV light-cured poly(meth)acrylate. The protective layer must be of good optical quality, i.e. substantially free from optical aberrations and substantially uniform in thickness, when the laser-light enters the recording stacks via the protective layer. In this case, the protective layer of course is transparent to the laser-light.

Recording and erasing data in the recording layers of the recording stacks may be achieved by using a short-wavelength laser, e.g. with a wavelength of 660 nm or shorter (red to blue).

Both the metal reflective layer and the dielectric layers can be provided by evaporation or sputtering.

The ITO layer can be provided by sputtering or by wet chemical means.

The phase-change recording layer can be applied to the substrate by vacuum deposition. Known vacuum deposition processes are evaporation (E-beam evaporation, resistant heat evaporation from a crucible), sputtering, low pressure Chemical Vapor Deposition (CVD), Ion Plating, Ion Beam Assisted Evaporation, Plasma enhanced CVD. Normal thermal CVD processes are not applicable because of too high reaction temperature.

The invention will be elucidated in greater detail by means of exemplary embodiments and with reference to the accompanying schematic drawings, in which
Figs. 1 to 2 each show a schematic cross-sectional view of an optical data storage medium in accordance with the invention,
Fig. 3 to 6 shows a schematic cross-sectional view of an optical data storage medium not in accordance with the invention, and
Fig. 7 shows two graphs of the Melt-threshold power Pₜ of the recording layer as a function of the total thickness dₚ₋ₘ of the layers between the recording layer and the metal reflective layer.

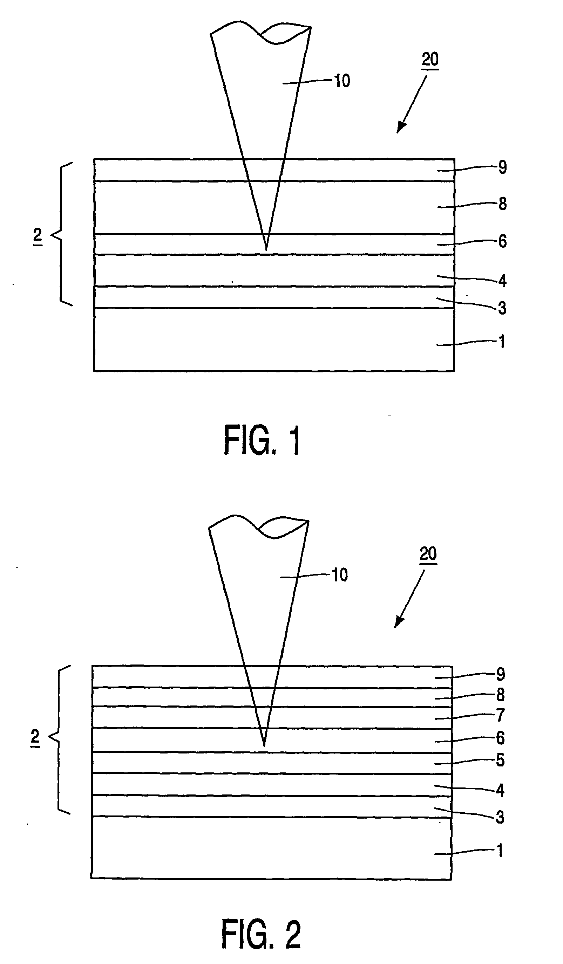

In Fig. 1 an embodiment of the optical data storage medium 20 for rewritable recording by means of a focused laser-light beam 10 according to the invention is shown. The medium 20 has a substrate 1, made of polycarbonate (PC), with deposited on a side thereof a recording stack 2. The recording stack 2 comprises:
- a transparent layer 4,
- a phase-change type recording layer 6,
- a metal reflective layer 3.
The transparent layer 4 comprises the material indium tin oxide (ITO). The transparent layer 4 is interposed between the recording layer 6 and the metal reflective layer 3 and is present in contact with the recording layer 6. The transparent layer 4 has a thickness of 25 nm. The complex refractive index of the ITO material is n=2.00-i0.02 at a laser-light wavelength of 670 nm, which shows it has a low absorption for said laser-light.
A further transparent layer 8, comprising the material indium tin oxide, is present in the recording stack 2 at a side of the recording layer 6 opposite from the side of the transparent layer 4. The further transparent ITO layer 8 has a thickness of 130 nm. The metal reflective layer 3 comprises the metal Ag and has a thickness of 100 nm. The recording layer 6 comprises the compound with atomic composition Ge_{5.0}In_{5.5}Sb_{65.0}Te_{24.5} and has a thickness of 10 nm. The optical reflection of the recording stack 2 at a wavelength of 670 nm, when the recording layer 6 is in amorphous phase, is defined as Rₐ and has a value of 1.7%. The optical reflection of the recording stack 2 at a wavelength of 670 nm, when the recording layer 6 is in the crystalline phase, is defined as R_{c} and has a value of 29.6%. The optical contrast is 94.3%. The optical contrast is defined as |R_{c} - Rₐ|/ Rₘₐₓ in which formula Rₘₐₓ is the maximum value of either R_{c} or Rₐ.
A protective layer 9, made e.g. of a laser-light transparent UV curable resin having a thickness of 100 µm is present adjacent the further ITO layer 8. Spincoating and subsequent UV curing may provide layer 9. The protective layer 9 may also be provided by applying, e.g., a sheet of polycarbonate (PC) by means of a Pressure Sensitive Adhesive (PSA) layer.

In Fig. 2 another embodiment of the optical information medium 20 is shown wherein at least one dielectric layer 5, 7 is present in the recording stack in contact with the recording layer 6. In particular two dielectric layers 5, 7 are present, one on each side of the recording layer 6. In all embodiments the dielectric layers comprise the compound (ZnS)₈₀(SiO2)₂₀. Each dielectric layer has a thickness of 5 nm. The ITO layers 4 and 8 have a thickness of 20 and 140 nm respectively. The substrate 1, recording layer 6, the metal reflective layer 3 and the protective layer 9 are the same as described in the embodiment of Fig. 1. Rₐ has a value of 1.9% and R_{c} has a value of 29.9%. The optical contrast is 93.6%.

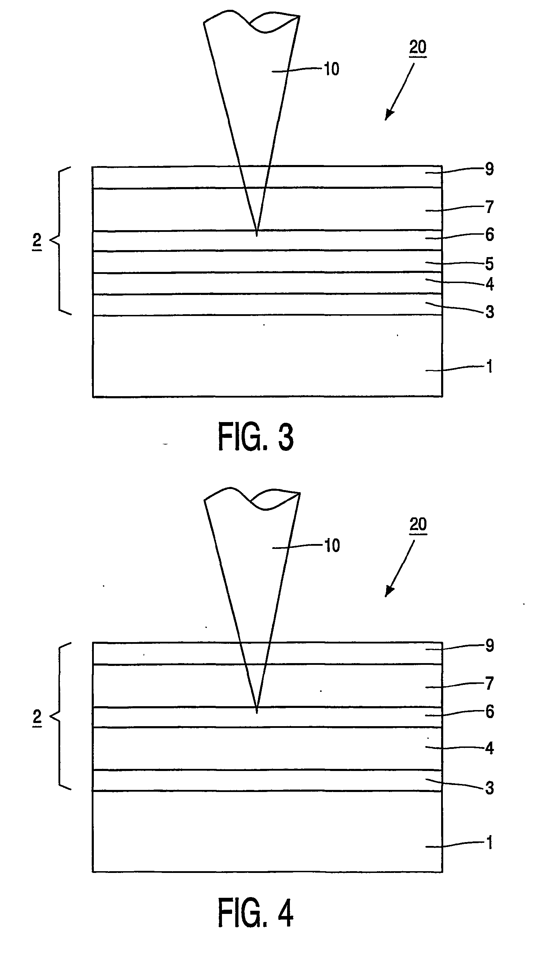

In Fig. 3 an embodiment not in accordance with the present invention of the medium 20 is shown wherein one ITO layer 4 is present, interposed between the recording layer 6 and the metal reflective layer 3. The ITO layer has thickness of 20 nm. The dielectric layer 7 between the cover layer and the recording layer has a thickness of 130 nm. The dielectric layer 5 between the ITO layer and the recording layer has a thickness of 5 nm. The substrate 1, recording layer 6, the metal reflective layer 3 and the protective layer 9 are the same as described in the embodiment of Fig.1. Rₐ has a value of 2.3% and R_{c} has a value of 31.4%. The optical contrast is 92.9%.

In Fig. 4 another embodiment not in accordance with the present invention of the medium 20 is shown. It is the embodiment of Fig. 3 in which the dielectric layer 5 between the metal reflective layer 3 and the recording layer 6 has been deleted and the ITO layer 4 has a thickness of 25 nm. Rₐ has a value of 2.4% and R_{c} has a value of 31.7%. The optical contrast is 92.5%.

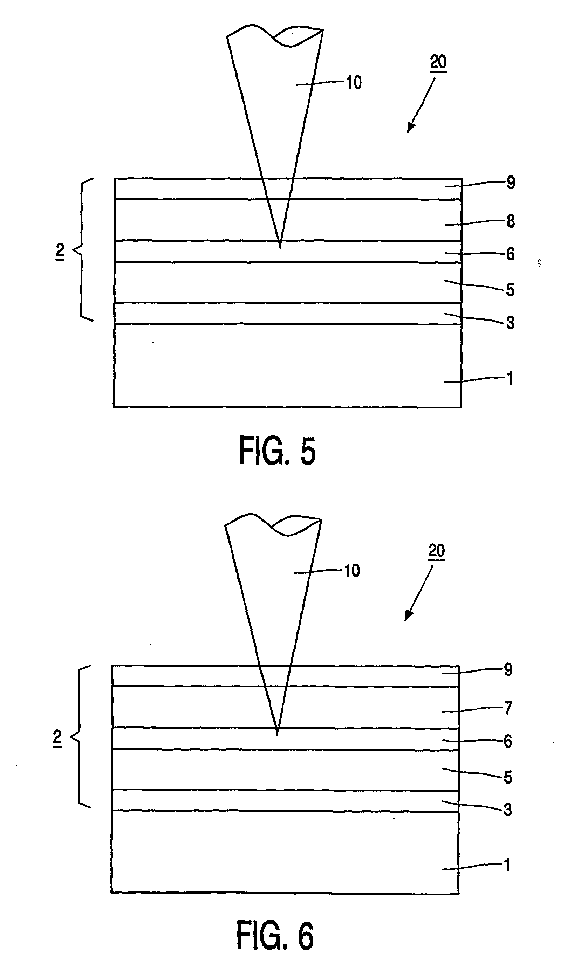

In Fig. 5 another embodiment not in accordance with the present invention of the medium 20 is shown. The ITO layer 8 is present in contact with the recording layer 6 at side of the recording layer 6 remote from the metal reflective layer 3. A dielectric layer 5 is present in the recording stack 2 in contact with the recording layer 6 at a side of the recording layer 6 closest to the metal reflective layer 3. The dielectric layer 5 is has a thickness of 25 nm and the ITO layer 8 has a thickness of 130 nm The substrate 1, recording layer 6, the metal reflective layer 3 and the protective layer 9 are the same as described in the embodiment of Fig. 1. Rₐ has a value of 1.4% and R_{c} has a value of 28.7%. The optical contrast is 95.2%.

In Fig. 6, for comparison, a typical embodiment of an optical data storage medium not according to the invention is shown. Said medium 20 has a substrate 1 with deposited on a side thereof a recording stack 2. The stack 2 comprises at least one transparent layer 5 and/or 7, a phase-change type recording layer 6, and a metal reflective layer 3. A transparent dielectric layer 5, 7 is present on both sides of the recording layer. The dielectric layers 5, 7 comprise (ZnS)₈₀(SiO2)₂₀. Dielectric layer 7 has a thickness of 130 nm and dielectric layer 5 has a thickness of 25 nm. This embodiment does not have an ITO layer. The substrate 1, recording layer 6, the metal reflective layer 3 and the protective layer 9 are the same as described in the embodiment of Fig. 1. Rₐ has a value of 2.0% and R_{c} has a value of 30.8%. The optical contrast is 93.5%.

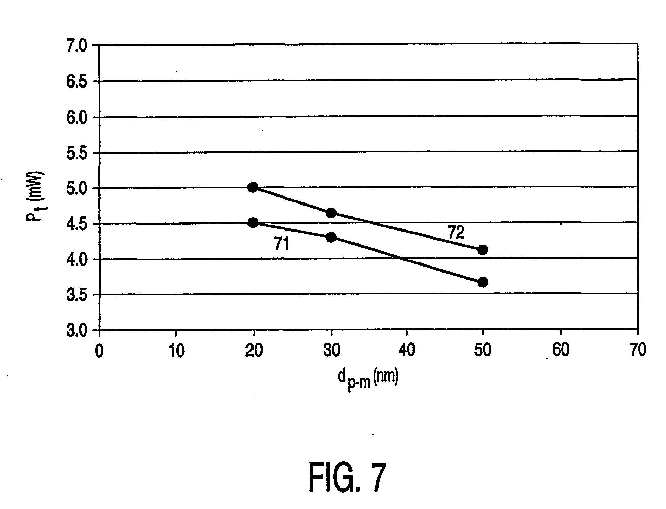

In Fig. 7, two graphs 71 and 72 are shown of the Melt-threshold power Pₜ (in mW) for respectively:
- a medium of Fig. 6, i.e. not according to the invention, in which the thickness of dielectric layer 5 is varied, and
- a medium according to Fig. 3, i.e. according to the invention, in which the dielectric layer 5 between the ITO layer 4 and the metal reflective layer 3 has a thickness of 10 nm instead of 5 nm, and in which the thickness of the ITO layer 4 is varied.

The Melt-threshold power is shown as a function of the total thickness dₚ₋ₘ (in nm) of the layer(s) between the metal reflective layer 3 and the recording layer 6. In the case of Fig. 6, this is just the thickness of the (ZnS)₈₀(SiO2)₂₀ dielectric layer 5. In case of Fig. 3, this is the sum of the thickness of the dielectric layer 5 and the ITO layer 4. Actually, since the thickness of dielectric layer 5 is kept constant only the thickness of the ITO layer 4 is varied. It can clearly be seen that the ITO layer 4 substantially increases the Melt-threshold power by comparing graphs 71 and 72. This indicates that the thermal conductivity between the recording layer 6 and the metal reflective layer 3 is better with an ITO layer 4. Because of the better thermal conductivity, the cooling rate of the recording layer 6 is increased.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

According to the invention, a rewritable phase-change optical data storage medium is provided with an improved cooling behavior of the recording layer resulting in a higher possible data rate for high speed recording and which is suitable for direct overwrite, such as e.g. CD-RW high speed, DVD+RW, DVD-RW, DVD-RAM, DVD-red and -blue.

## Claims

1. An optical data storage medium (20) for rewritable recording by means of a focused laser-light beam (10), said medium (20) having a substrate (1) with deposited on a side thereof a recording stack (2) comprising:
- a first transparent layer (4),
- a phase-change type recording layer (6),
- a second transparent layer (8), present in the recording stack (2) at a side of the recording layer (6) opposite from the side of the first transparent layer (4),
- a metal reflective layer (3),
**characterized in that** the first transparent layer (4) and the second transparent layer (8) comprises the material indium tin oxide.

2. An optical data storage medium (20) as claimed in Claim 1, wherein the first transparent layer (4) is interposed between the recording layer (6) and the metal reflective layer (3).

3. An optical data storage medium (20) as claimed in any one of Claims 1 or 2, wherein the first transparent layer (4) is present in contact with the recording layer (6).

4. An optical data storage medium as claimed in any one of Claims 1 - 3, wherein at least one dielectric layer (5, 7) is present in the recording stack (2) in contact with the recording layer (6).

5. An optical data storage medium (20) as claimed Claim 4, wherein the dielectric layer (5, 7) comprises a compound selected from the group consisting of Al₂O₃, SiC, Si₃N₄, MgO, ZnO and AIN including their non-stoichiometric compositions.

6. An optical data storage medium (20) as claimed in any one of Claims 1 - 5, wherein the metal reflective layer (3) comprises the metal Ag.

7. An optical data storage medium (20) as claimed in any one of Claims 2 - 3, wherein the first transparent layer (4) has a thickness in the range of 10 to 50 nm.

8. An optical data storage medium (20) as claimed in any one of Claims 2 - 3, wherein the second transparent layer (8) has a thickness in the range of 50 to 250 nm.

9. An optical data storage medium (20) as claimed in any one of the preceding Claims, wherein the recording layer (6) comprises the elements Ge and Te.

10. Use of an optical data storage medium (20) according to any one of Claims 1 - 9 four high data rate recording.

## Patentansprüche

1. Optisches Datenspeichermedium (20) zum wiederholten Beschreiben mittels eines fokussierten Laserlichtstrahls (10), wobei das Medium (20) ein Substrat (1) mit einem auf einer Seite desselben aufgebrachten Aufzeichnungsstapel (2) aufweist, welcher umfasst:
- eine erste transparente Schicht (4),
- eine Aufzeichnungsschicht vom Phasenwechseltyp (6),
- eine zweite transparente Schicht (8), die in dem Aufzeichnungsstapel (2) auf einer Seite der Aufzeichnungsschicht (6) gegenüber der Seite der ersten transparenten Schicht (4) vorhanden ist,
- eine reflektierende Metallschicht (3),
**dadurch gekennzeichnet, dass** die erste transparente Schicht (4) und die zweite transparente Schicht (8) das Material Indium-Zinn-Oxid umfassen.

2. Optisches Datenspeichermedium (20) nach Anspruch 1, wobei die erste transparente Schicht (4) zwischen der Aufzeichnungsschicht (6) und der reflektierenden Metallschicht (3) angeordnet ist.

3. Optisches Datenspeichermedium (20) nach einem der Ansprüche 1 oder 2, wobei sich die erste transparente Schicht (4) in Kontakt mit der Aufzeichnungsschicht (6) befindet.

4. Optisches Datenspeichermedium nach einem der Ansprüche 1 - 3, wobei mindestens eine dielektrische Schicht (5, 7) in dem Aufzeichnungsstapel (2) vorhanden ist, die sich in Kontakt mit der Aufzeichnungsschicht (6) befindet.

5. Optisches Datenspeichermedium (20) nach Anspruch 4, wobei die dielektrische Schicht (5, 7) eine Verbindung umfasst, die aus der Gruppe gewählt ist, die aus Al₂O₃, SiC, Si₃N₄, MgO, ZnO und AlN besteht, einschließlich von deren nichtstöchiometrischen Zusammensetzungen.

6. Optisches Datenspeichermedium (20) nach einem der Ansprüche 1 - 5, wobei die reflektierende Metallschicht (3) das Metall Ag umfasst.

7. Optisches Datenspeichermedium (20) nach einem der Ansprüche 2 - 3, wobei die erste transparente Schicht (4) eine Dicke im Bereich von 10 bis 50 nm hat.

8. Optisches Datenspeichermedium (20) nach einem der Ansprüche 2 - 3, wobei die zweite transparente Schicht (8) eine Dicke im Bereich von 50 bis 250 nm hat.

9. Optisches Datenspeichermedium (20) nach einem der vorhergehenden Ansprüche, wobei die Aufzeichnungsschicht (6) die Elemente Ge und Te umfasst.

10. Verwendung eines optischen Datenspeichermediums (20) nach einem der Ansprüche 1-9 für eine Hochgeschwindigkeits-Datenaufzeichnung.

## Revendications

1. Support de stockage optique de données (20) pour enregistrement réinscriptible au moyen d'un faisceau de lumière laser focalisé (10), ledit support (20) ayant un substrat (1) avec, déposé sur un côté de celui-ci, un empilement d'enregistrement (2) qui comprend :
- une première couche transparente (4),
- une couche d'enregistrement du type à changement de phase (6),
- une deuxième couche transparente (8), présente dans l'empilement d'enregistrement (2) d'un côté de la couche d'enregistrement (6) opposé au côté de la première couche transparente (4),
- une couche métallique réfléchissante (3),
**caractérisé en ce que** la première couche transparente (4) et la deuxième couche transparente (8) comprennent le matériau oxyde d'étain - indium.

2. Support de stockage optique de données (20) selon la revendication 1, dans lequel la première couche transparente (4) est interposée entre la couche d'enregistrement (6) et la couche métallique réfléchissante (3).

3. Support de stockage optique de données (20) selon une quelconque des revendications 1 ou 2, dans lequel la première couche transparente (4) est présente en contact avec la couche d'enregistrement (6).

4. Support de stockage optique de données selon une quelconque des revendications 1 à 3, dans lequel au moins une couche diélectrique (5, 7) est présente dans l'empilement d'enregistrement (2) en contact avec la couche d'enregistrement (6).

5. Support de stockage optique de données (20) selon la revendication 4, dans lequel la couche diélectrique (5, 7) comprend un composé sélectionné parmi le groupe composé de AI₂O₃, SiC, Si₃N₄, MgO, ZnO et AlN, y compris leurs compositions non stoechiométriques.

6. Support de stockage optique de données (20) selon une quelconque des revendications 1 à 5, dans lequel la couche métallique réfléchissante (3) comprend le métal Ag.

7. Support de stockage optique de données (20) selon une quelconque des revendications 2 à 3, dans lequel la première couche transparente (4) a une épaisseur dans la plage de 10 à 50 nm.

8. Support de stockage optique de données (20) selon une quelconque des revendications 2 à 3, dans lequel la deuxième couche transparente (8) a une épaisseur dans la plage de 50 à 250 nm.

9. Support de stockage optique de données (20) selon une quelconque des revendications précédentes, dans lequel la couche d'enregistrement (6) comprend les éléments Ge et Te.

10. Utilisation d'un support de stockage optique de données (20) selon une quelconque des revendications 1 à 9 pour enregistrement à grand débit de données.
